# EUROPÄISCHE PATENTSCHRIFT

(11) **EP 4 030 234 B1**
(45) Veröffentlichungstag und Bekanntmachung des Hinweises auf die Patenterteilung: **11.10.2023**
(21) Anmeldenummer: 21213614.7
(22) Anmeldetag: 10.12.2021
(51) Int. Cl.: G03B 17/17, G03B 37/00, G03B 15/05, G01N 21/89, G01N 21/88, G01N 21/84, G06K 7/10, B07C 5/342, B07C 3/14

(54) **KAMERAVORRICHTUNG UND VERFAHREN ZUR ERFASSUNG EINES OBJEKTS**
CAMERA DEVICE AND METHOD FOR DETECTING AN OBJECT
DISPOSITIF CAMÉRA ET PROCÉDÉ DE DÉTECTION D'UN OBJET

(30) Priorität: 19.01.2021 DE 102021100947
(43) Veröffentlichungstag der Anmeldung: 20.07.2022
(73) Patentinhaber: SICK AG, 79183 Waldkirch (DE)
(72) Erfinder: Wehrle, Klemens, 79297 Winden (DE); Paske, Ralf, 79183 Waldkirch (DE)

(56) Entgegenhaltungen:
- EP-A1- 2 937 810
- EP-A2- 0 258 810
- WO-A1-2004/105967
- US-A1- 2010 163 622

## Beschreibung

Die Erfindung betrifft eine Kameravorrichtung und ein Verfahren zur Erfassung eines Objekts in einem Strom von relativ zu der Kameravorrichtung in einer Längsrichtung bewegten Objekten nach dem Oberbegriff von Anspruch 1 beziehungsweise 11.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine wichtige Anwendung von Kameras ist das Lesen von Codes. Mit Hilfe eines Bildsensors werden Objekte mit den darauf befindlichen Codes erfasst, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert. In der Regel liefert das Fördersystem durch einen Inkrementalgeber fortlaufend wegbezogene Impulse, damit die Objektpositionen zu jedem Zeitpunkt auch bei wechselnder Fördergeschwindigkeit bekannt sind.

Der Bildsensor der Kamera kann als Zeile oder Matrix ausgebildet sein. Die Bewegung des abzutastenden Objekts wird verwendet, um sukzessive ein Bild zusammenzusetzen, indem Zeilen aneinandergereiht oder Einzelbilder kombiniert werden. Dabei ist aus der jeweiligen Perspektive der Kamera immer nur eine Objektseite erfassbar, und für jede weitere Leseseite muss eine zusätzliche Kamera eingesetzt werden.

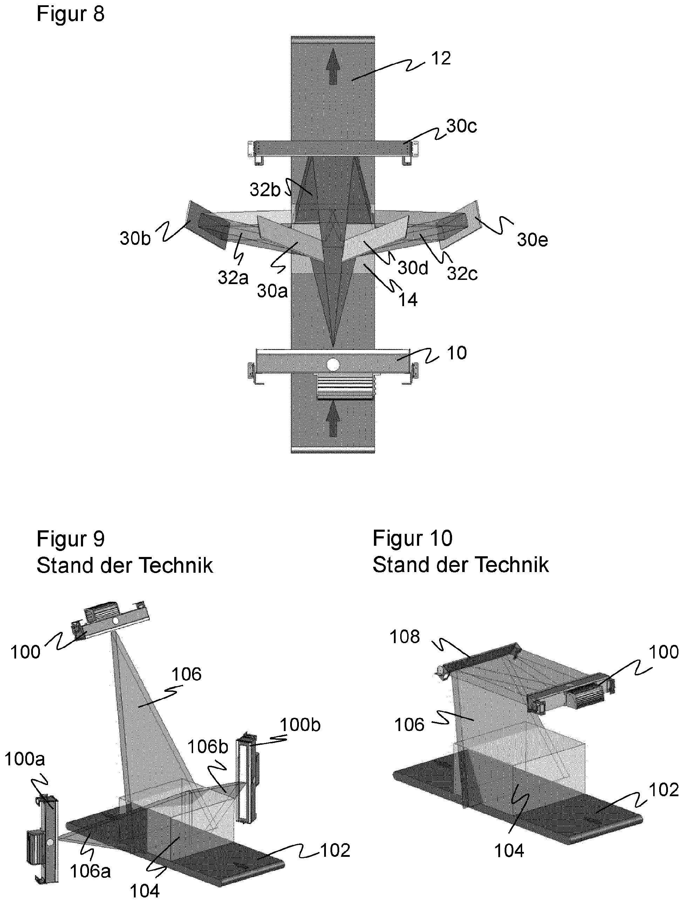

Figur 9 zeigt eine herkömmliche Installation, wo eine Kamera 100 ein auf einem Förderband 102 befindliches Objekt 104 mit ihrem Sichtbereich 106 von oben her aufnimmt, in einer sogenannten Toplesung. Für eine Seitenlesung sind zusätzliche neben dem Förderband 102 montierte Kameras 100a-b mit entsprechenden Sichtbereichen 106a-b erforderlich. Figur 10 zeigt eine alternative Montage für eine Toplesung unter Verwendung eines Umlenkspiegels 108. Auf diese Weise ist eine kompaktere Bauform des Lesetunnels mit näher angebrachter Kamera 100 möglich. Es ändert aber nichts daran, dass die Kamera 100 nur eine einzige Objektseite erfassen kann und für eine Seitenlesung zwei zusätzliche Kameras benötigt würden.

Es ist denkbar, die Kamera so zu orientieren, dass im Laufe der Förderbewegung zwei Seiten des Objekts nacheinander erfassbar werden. In der US 6 484 066 B1 betrachtet eine Kamera aus entsprechend schräger Perspektive die Frontfläche und eine Seitenfläche und eine zweite Kamera die Rückfläche und die andere Seitenfläche. Jeweilige Spiegel verlängern nach dem Prinzip der oben erläuterten Figur 10 den Lichtweg auf kleinem Bauraum. Die schräge Perspektive führt aber zu Verzerrungen, die ausgeglichen werden müssen und die Bildqualität mindern.

Die DE 20 2013 009 198 U1 offenbart eine Vorrichtung zum Umlenken und zur Verbreiterung des Sichtbereichs einer Kamera. Dabei wird durch entsprechend gegeneinander verkippte Spiegel ein breiterer Sichtbereich aufgenommen, indem nebeneinanderliegende Teilbereiche auf dem Bildsensor übereinander abgebildet werden. Eine alternative Spiegelanordnung für eine entsprechende Sichtbereichsverbreiterung wird in EP 2 624 042 A2 vorgestellt. In beiden Fällen bleibt es aber bei einer einzigen Perspektive auf das Objekt, für eine Erfassung von mehreren Seiten müssen weiterhin mehrere Kameras eingesetzt werden.

Die EP 0 258 810 A2 befasst sich mit der Inspektion von Artikeln. Durch eine Vielzahl von Spiegeln werden fünf der sechs Seiten mit derselben Kamera erfassbar. Die zahlreichen Spiegel führen zu einem hohen Justageaufwand und funktionieren nicht mit einer Zeilenkamera, und die Auflösung für ein Codelesen bleibt dementsprechend begrenzt, wobei Codelesen auch keine vorgesehene Anwendung ist. Für die Beleuchtung wird eine ganze Gruppe von Beleuchtungseinheiten um den Artikel angeordnet. Eine Erfassung eines Objekts von mehreren Seiten durch eine Spiegelanordnung ist auch aus US 2010 226 114 A1 bekannt, wobei zu den vergleichbaren Nachteilen noch hinzukommt, dass hier keine Bewegung des Objekts vorgesehen ist.

In der EP 2 937 810 A1 werden gestaffelte Spiegel eingesetzt, um ein Objekt effektiv mehrfach in unterschiedlichem Abstand aufzunehmen. Dadurch befindet sich das Objekt auf dem Lichtweg über zumindest einen der Spiegel im Tiefenschärfenbereich. In einer Ausführungsform werden die Spiegel genutzt, um je nach Förderposition die Vorderseite, Oberseite oder Rückseite zu erfassen. Eine gleichzeitige Erfassung eines Objekts aus mehreren Perspektiven ist so aber nicht möglich, und die Seitenflächen könnten weiterhin nur mit zusätzlichen Kameras aufgenommen werden.

Die US 2010/0163622 A1 verwendet eine monolithische Spiegelstruktur in einem optischen Codeleser, um das Sichtfeld des Bildsensors auf mehrere unterschiedliche Ansichten aufzuteilen. Diese Spiegelstruktur ist aufwändig und unflexibel.

Die WO 2004/105967 A1 befasst sich mit einer Vorrichtung zur Bildaufnahme von Produkten, wie Früchten oder Eiern, auf einem Förderband. Das Sichtfeld einer Kamera wird mit Hilfe von Spiegeln vierfach aufgespalten, um einen größeren Oberflächenbereich der Produkte zu erfassen.

Es ist daher Aufgabe der Erfindung, eine verbesserte Erfassung von in einem Strom bewegten Objekten zu erreichen.

Diese Aufgabe wird durch eine Kameravorrichtung und ein Verfahren zur Erfassung eines Objekts in einem Strom von relativ zu der Kameravorrichtung in einer Längsrichtung bewegten Objekten nach Anspruch 1 beziehungsweise 12 gelöst. Eine Kamera der Kameravorrichtung nimmt mit einem Bildsensor Bilder von Objekten auf, die einen Strom von Objekten bilden, der sich zu der Kamera in Relativbewegung in einer Längsrichtung befindet. Mindestens ein erstes Umlenkelement sorgt für eine Faltung des Empfangsstrahlengangs für die Bildaufnahme. Das Sichtfeld der Kamera ist in mindestens einen ersten Teilsichtbereich mit Erfassung des ersten Umlenkelements und einen zweiten Teilsichtbereich ohne Erfassung des ersten Umlenkelements aufgeteilt. Mit anderen Worten ist das erste Umlenkelement im ersten Teilsichtbereich zu sehen und im zweiten Teilsichtbereich nicht. Allgemein können auch mehr als zwei Teilsichtbereiche mit unterschiedlichen Konfigurationen von einzelnen Umlenkelementen oder mehreren Umlenkelementen nacheinander vorgesehen sein. Es ist denkbar, dass ein Teilsichtbereich das Objekt ganz ohne Umlenkung und folglich direkt aufnimmt. Die Teilsichtbereiche sind vorzugsweise zueinander disjunkt, entsprechen somit unterschiedlichen Pixeln des Bildsensors, und/oder bilden gemeinsam das gesamte Sichtfeld des Bildsensors beziehungsweise der Kamera, womit dann alle Pixel des Bildsensors ausgenutzt sind.

Die Erfindung geht von dem Grundgedanken einer Erweiterung des Sichtfeldes der Kamera durch unterschiedliche Faltung des Strahlengangs aus, und zwar dergestalt, dass unterschiedliche Perspektiven auf das Objekt über die ursprüngliche Perspektive hinaus entstehen. Das erste Umlenkelement schafft eine zusätzliche Perspektive auf das Objekt, indem es im ersten Teilsichtbereich überhaupt für eine Faltung oder jedenfalls eine andere Faltung als im zweiten Teilsichtbereich sorgt. Dadurch wird die Aufnahme des Objekts aus mehreren Perspektiven mit derselben Kamera ermöglicht. Diese Aufnahme findet gleichzeitig aus den unterschiedlichen Perspektiven statt, anders als beispielsweise in der EP 2 937 810 A1, wo Vorder-, Ober- und Rückfläche nur nacheinander in unterschiedlichen Förderpositionen erfassbar sind. Die Perspektiven sind überdies weitgehend frei wählbar, einschließlich einer Seitenerfassung.

Diese Beschreibung ist an vielen Stellen von der Vorstellung zumindest grob quaderförmiger Objekte getrieben, die sechs Seiten oder Flächen aufweisen. Das ist auch ein häufiger Anwendungsfall, aber die Erfindung ist darauf nicht beschränkt, zumal es die entsprechenden sechs Perspektiven bei Objekten beliebiger Geometrie genauso gibt.

Die Erfindung hat den Vorteil, dass eine Erfassung von mehreren Seiten mit weniger Kameras möglich wird. Die reduzierte Anzahl Kameras verringert die Kosten und die

Komplexität und ermöglicht ein kleineres und kompakteres mechanisches Systemdesign. Dabei wird die zunehmend verfügbare hohe Auflösung von Bildsensoren sinnvoll und möglichst vollständig ausgenutzt.

Die zweite Perspektive ist bevorzugt eine Draufsicht. Der Strom der Objekte wird somit aus der zweiten Perspektive von oben erfasst und die Oberseite der Objekte aufgenommen, bei einem Codeleser auch als Toplesung bezeichnet. Dabei ist die Kamera vorzugsweise auch oberhalb des Stroms montiert. Sie ist entweder selbst nach unten orientiert, oder die zweite Perspektive von oben wird durch entsprechende Umlenkelemente geschaffen. Das erste Umlenkelement ist nicht beteiligt, es liegt außerhalb des zweiten Teilsichtbereichs.

Die erste Perspektive ist eine Seitensicht senkrecht zu der Längsrichtung. Die erste, in dieser Ausführungsform seitliche Perspektive entsteht durch die Umlenkung des ersten Umlenkelements. Somit wird zusätzlich eine Objektseite erfasst, beispielsweise zusätzlich zu der Oberseite aus der zweiten Perspektive, wobei alternativ die zweite Perspektive auch eine Vorder- oder Rückfläche aufnehmen kann.

Die Kameravorrichtung umfasst bevorzugt ein zweites Umlenkelement, das Sichtfeld der Kamera weist einen dritten Teilsichtbereich mit Erfassung des zweiten Umlenkelements auf, und das zweite Umlenkelement ist derart angeordnet, dass eine dritte Perspektive des dritten Teilsichtbereichs eine andere ist als die erste Perspektive und die zweite Perspektive, so dass mit dem Bildsensor gleichzeitig drei Seiten des Objekts aufgenommen werden. Analog der ersten Perspektive durch das erste Umlenkelement wird somit noch eine dritte Perspektive mit einem dritten Teilsichtbereich und einem zweiten Umlenkelement erzeugt. Demnach wird das zweite Umlenkelement genau im dritten Teilsichtbereich erfasst, entsprechend nicht in den anderen Teilsichtbereichen und das erste Umlenkelement nicht im dritten Teilsichtbereich. Die dritte Perspektive ist besonders bevorzugt eine Seitensicht aus einer Gegenrichtung zu der ersten Perspektive. Damit werden beide Seiten des Objekts aus der ersten und dritten Perspektive aufgenommen, zusätzlich zu der zweiten Perspektive beispielsweise auf die Oberseite.

Die Kamera ist stationär an einer Fördereinrichtung montiert, die den Strom der Objekte in der Längsrichtung fördert. Eine bevorzugte Montageposition ist über dem Förderband, um so eine Erfassung von oben mit der Erfassung einer oder mehrerer weiterer Seiten zu kombinieren, insbesondere mit einer seitlichen Erfassung. Es sind aber auch andere Montagepositionen denkbar, um andere Perspektiven zu kombinieren. Soll die Unterseite erfasst werden, so sind Vorkehrungen an der Fördereinrichtung wie ein Sichtfenster zu treffen.

Die Kameravorrichtung weist bevorzugt ein drittes Umlenkelement auf, das derart angeordnet ist, dass es in dem zweiten Teilsichtbereich erfasst wird. Somit ist der Empfangsstrahlengang auch im zweiten Teilsichtbereich beziehungsweise in der zweiten Perspektive gefaltet. Ein Beispiel ist die Orientierung der Kamera nicht direkt hin zu dem Objekt, etwa eine flache Blickrichtung zumindest näherungsweise parallel oder antiparallel zur Längsrichtung mit Umlenkung auf das Objekt von oben oder von einer Seite. Es ist denkbar, den Strahlengang der zweiten Perspektive durch weitere Umlenkelemente mehrfach zu falten.

Die Kameravorrichtung weist ein weiteres Umlenkelement auf, im Folgenden manchmal viertes Umlenkelement genannt, das den durch das erste Umlenkelement gefalteten Empfangsstrahlengang der ersten Perspektive ein weiteres Mal faltet. Die Umlenkung für die erste Perspektive ist demnach zweistufig, beispielsweise zunächst von einer oberhalb montierten Kamera neben den Strom und dann auf das Objekt. Die doppelte Umlenkung erlaubt neben einem besonders kompakten Aufbau eine Erfassung des Objekts wenigstens nahezu senkrecht zu dessen aufzunehmender Fläche, insbesondere Seitenfläche.

Die Kameravorrichtung weist bevorzugt ein fünftes Umlenkelement auf, das den durch das zweite Umlenkelement gefalteten Empfangsstrahlengang der dritten Perspektive ein weiteres Mal faltet. Die Funktion des fünften Umlenkelements für die dritte Perspektive entspricht derjenigen des vierten Umlenkelements für die erste Perspektive.

Die Umlenkelemente sind bevorzugt derart angeordnet, dass die Lichtwege zwischen Kamera und Objekt für die verschiedenen Perspektiven mit einer einem Tiefenschärfenbereich der Kamera entsprechenden Toleranz gleich lang sind. Dadurch werden in allen Perspektiven scharfe Bilder aufgenommen. Eine Umsetzungsmöglichkeit besteht darin, das dritte Umlenkelement in größerem Abstand von der Kamera anzubringen als das erste beziehungsweise zweite Umlenkelement. Damit wird letztlich der Lichtweg in der zweiten Perspektive künstlich verlängert, um den Umweg auszugleichen, der in der ersten beziehungsweise dritten Perspektive erforderlich ist. Dadurch wird es möglich, dass der Lichtweg von der Kamera über das dritte Umlenkelement auf das Objekt, beispielsweise dessen Oberseite, in etwa gleich lang ist wie derjenige von der Kamera über das erste Umlenkelement und das vierte Umlenkelement auf das Objekt, beispielsweise dessen Seitenfläche, beziehungsweise entsprechend von der Kamera über das zweite Umlenkelement und das fünfte Umlenkelement auf das Objekt, beispielsweise dessen andere Seitenfläche.

Die jeweiligen Umlenkelemente weisen bevorzugt einen Spiegel und eine Halterung zur Montage in einer vorgegebenen Anordnung und Orientierung zu dem Strom der Objekte auf. Durch eigene Halterungen und als eigene Bauteile können die Umlenkelemente weitgehend wahlfrei im Raum platziert und orientiert werden, ganz anders als beispielsweise bei einer monolithischen Spiegelstruktur gemäß der einleitend genannten US 2010/0163622 A1. Die Spiegel erfüllen weitere optische Aufgaben, etwa durch gekrümmte Spiegelflächen mit Bündelungs- oder Streueigenschaften oder durch Beschichtungen und dergleichen mit Filterungseigenschaften für bestimmte Spektren versehen werden.

Der Bildsensor ist bevorzugt als Zeilensensor ausgebildet. Solche Zeilensensoren sind mit sehr hohen Pixelauflösungen verfügbar, die teilweise für die Erfassung einer einzigen Objektseite gar nicht mehr zwingend gebraucht werden. Erfindungsgemäß können die zusätzlichen Pixel genutzt werden, um aus zusätzlichen Perspektiven zusätzliche Seiten aufzunehmen.

Den Teilsichtbereichen entsprechen bevorzugt nebeneinanderliegende Pixelbereiche des Bildsensors, insbesondere ein zentraler Pixelbereich dem zweiten Teilsichtbereich und ein seitlicher Pixelbereich dem ersten beziehungsweise weiteren Teilsichtbereichen. Die Breite des Sichtbereichs ist dann vorzugsweise größer als diejenige des zu erfassenden Stroms von Objekten oder des Förderbands, und ein seitlicher Überschuss wird vorteilhaft einseitig oder beidseitig für eine weitere Perspektive oder zwei weitere Perspektiven genutzt.

Alternativ entsprechen den Teilsichtbereichen übereinanderliegende Pixelbereiche des Bildsensors. In diesem Fall ist der Bildsensor ein Matrixsensor, dessen übereinanderliegende Zeilenabschnitte für die verschiedenen Perspektiven verwendet werden. Dafür sind vorzugsweise die Umlenkelemente mit mehreren entsprechend verkippten Abschnitten ausgebildet oder zusätzliche Umlenkelemente eingesetzt, um die Teilsichtbereiche passend auf dem Matrixsensor anzuordnen.

Die Kameravorrichtung weist eine Beleuchtungseinheit auf, um die Teilsichtbereiche über die jeweiligen Umlenkelemente zu beleuchten. Wenn die Beleuchtungseinheit ebenfalls die Umlenkelemente nutzt, genügt eine einzige zentrale Beleuchtungseinheit, ganz anlog zu einem einzigen Bildsensor, der erfindungsgemäß aus mehreren Perspektiven aufnehmen kann.

Die Kameravorrichtung weist bevorzugt eine Steuer- und Auswertungseinheit auf, die dafür ausgebildet ist, in den mit dem Bildsensor erfassten Bilddaten Codebereiche aufzufinden und deren Codeinhalt zu lesen. Es können Codeinhalte in einem weiteren Sinne erfasst werden, wie beim Lesen von Texten (OCR, Optical Character Reading) oder dem Erkennen von Symbolen. Besonders bevorzugt ist jedoch ein kamerabasierter Codeleser gemeint, der optische Barcodes und optische 2D-Codes liest, und dies mit einer einzigen Kamera und einem einzigen Bildsensor von mehreren Objektseiten zugleich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Ansicht einer an einem Förderband mit zu erfassenden Objekten montierten Kamera;
- Fig. 2: eine dreidimensionale Ansicht einer Kameravorrichtung mit gefalteten Strahlengängen zur gleichzeitigen Erfassung von oben und von einer Seite;
- Fig. 3: eine Frontalansicht der Kameravorrichtung gemäß Figur 2;
- Fig. 4: eine Draufsicht der Kameravorrichtung gemäß Figur 2;
- Fig. 5: eine Zerlegung der Lichtwege in Figur 2 zur Erläuterung, wie das Objekt durch gleich lange Lichtwege für alle Perspektiven im Tiefenschärfenbereich gehalten werden kann;
- Fig. 6: eine dreidimensionale Ansicht einer Kameravorrichtung mit gefalteten Strahlengängen zur gleichzeitigen Erfassung von oben und von beiden Seiten;
- Fig. 7: eine Frontalansicht der Kameravorrichtung gemäß Figur 6;
- Fig. 8: eine Draufsicht der Kameravorrichtung gemäß Figur 6;
- Fig. 9: eine Darstellung einer herkömmlichen Kameravorrichtung, die für die Erfassung von drei Seiten drei Kameras benötigt; und
- Fig. 10: eine Darstellung einer weiteren herkömmlichen Kameravorrichtung, die mit Hilfe eines Spiegels bei horizontaler Ausrichtung ein Objekt von oben erfasst.

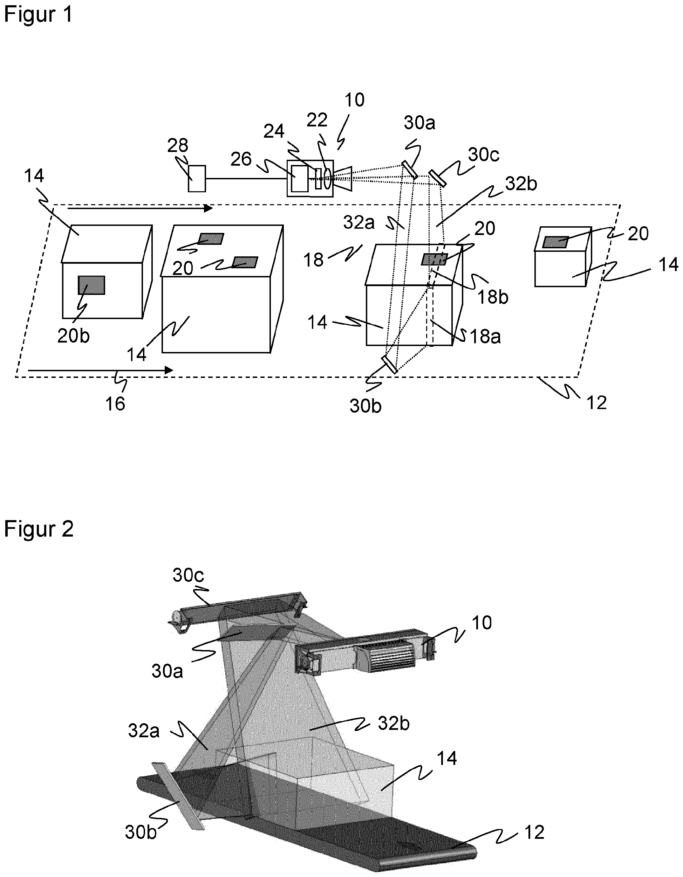

Figur 1 zeigt eine Kamera 10, die über einem Förderband 12 montiert ist, auf dem Objekte 14 in einer durch Pfeile angedeuteten Förderrichtung 16 durch einen Sichtbereich 18 der Kamera 10 gefördert werden. Die Objekte 14 tragen in einer bevorzugten Ausführungsform an ihren Außenflächen Codes 20, die von der Kamera 10 gelesen werden. Dazu nimmt die Kamera 10 über eine Empfangsoptik 22 mit einem Bildsensor 24 Bilder der jeweils im Sichtbereich 18 befindlichen Objekte 14 auf.

Eine Auswertungseinheit 26 umfasst eine Decodiereinheit, welche die Bilder auswertet. Dabei werden Codebereiche identifiziert und die Codeinhalte der Codes 20 ausgelesen. Die Auswertungsfunktionalität kann auch zumindest teilweise außerhalb der Kamera 10 implementiert sein. Die Kamera 10 ist nur vorzugsweise als kamerabasierter Codeleser ausgebildet. Neben dem Lesen von optisch 1D- oder 2DCodes sind weitere mögliche Bildverarbeitungsaufgaben die Erkennung von Symbolen, insbesondere HazMat-Labels, das Lesen von Schriften (OCR, Optical Character Reading), insbesondere von Anschriften, und weitere Verarbeitungen.

Die Kamera 10 kann als Zeilenkamera mit einem zeilenförmigen Bildsensor 24 vorzugsweise einer hohen Auflösung von beispielsweise achttausend oder zwölftausend Pixel ausgebildet sein. Alternativ ist der Bildsensor 24 ein Matrixsensor, der eine insgesamt vergleichbare Auflösung von vier, acht oder zwölf Megapixel aufweisen kann. Diese sind allerdings über die Fläche verteilt, so dass eine sukzessive Bildaufnahme mit einer Zeile im Laufe der Förderbewegung zu wesentlich höher aufgelösten Bildern führen kann. In einigen Anwendungen, insbesondere unter Verwendung von Bildverarbeitungen auf Basis maschinellen Lernens oder CNNs (Convolutional Neural Network), genügt auch eine geringere Pixelauflösung. Mit einem Matrixsensor ist grundsätzlich auch eine statische Bildaufnahme ohne bewegten Objektstrom beziehungsweise Förderband 12 vorstellbar. Umgekehrt ist es oft sinnvoll, auch die mit einem Matrixsensor aufgenommenen Bilder im Laufe einer Förderbewegung sukzessive zu einem größeren Bild zu kombinieren.

Zu einem von Kamera 10 und Förderband 12 gebildeten Lesetunnel können weitere Sensoren gehören, die stellvertretend durch einen Vorschubsensor 28 dargestellt sind, beispielsweise einen Inkrementalgeber, mit dem die Geschwindigkeit beziehungsweise der Vorschub des Förderbandes 12 ermittelt wird. Dadurch können Informationen, die irgendwo längs des Förderbandes 12 erfasst werden, auf anderer Positionen längs des Förderbandes 12 oder, was dank des bekannten Vorschubs gleichwertig ist, andere Zeitpunkte umgerechnet werden. Weitere denkbare Sensoren sind eine Triggerlichtschranke, welche jeweils den Eintritt eines Objekts 14 in den Sichtbereich 18 erkennt, oder ein Geometriesensor, insbesondere ein Laserscanner, welcher eine 3D-Kontur der Objekte 14 auf dem Förderband 12 erfasst.

Der Sichtbereich 18 der Kamera 10 wird durch Umlenkelemente 30a-c, insbesondere Spiegel, aufgeteilt und der jeweilige Empfangsstrahlengang 32a-b entsprechend gefaltet. Das wird später anhand der Figuren 2 bis 8 besser erkennbar und näher erläutert. Umlenkelemente 30a, 30b sorgen dafür, dass der eine Empfangsstrahlengang 32a auf eine Seite des Objekts 14 gefaltet wird. Mittels eines Umlenkelements 30c wird der andere Empfangsstrahlengang 32b von einem senkrechten Verlauf auf die Oberseite des Objekts 14 in die Horizontale entsprechend der Ausrichtung der Kamera 10 umgelenkt.

Dadurch entstehen Teilsichtbereiche 18a-b auf der Oberfläche und einer Seitenfläche des Objekts 14, so dass zugleich zwei Seiten des Objekts 14 erfassbar werden. Die Teilsichtbereiche 18a-b in Figur 1 sind zeilenförmig zur sukzessiven zeilenweise Erfassung des Objekts 14 im Laufe der Förderbewegung, bei einem Matrixsensor als Bildsensor 24 entstehen entsprechend breitere Teilsichtbereiche.

Durch die Unterteilung des Sichtbereichs 18 in Teilsichtbereiche 18a-b entstehen auch auf dem Bildsensor 24 zu unterscheidende Pixelbereiche oder Bildsegmente. Bei einem Zeilensensor liegen diese Bildsegmente vorzugsweise einfach nebeneinander. Es werden demnach für den zentralen Teil der Erfassung nicht benötigte Teilbereiche des Lesefelds und gegebenenfalls auch deren Ausleuchtung ausgekoppelt und durch Umlenkungen oder Faltungen für die Erfassung einer zusätzlichen Seite genutzt. Bei einem Matrixsensor können Teilsichtbereiche 18a-b ebenfalls nebeneinander, aber auch streifenweise übereinander auf dem Bildsensor 24 angeordnet sein.

Eine in Figur 1 nicht dargestellte aktive Beleuchtung der Kamera 10 wird als zu dem Bildsensor 24 koaxiale Beleuchtung ebenfalls über die Umlenkelemente 30a-c gefaltet.

Damit genügt eine zentrale Beleuchtung am Ort der Kamera oder darin integriert, und es werden damit die jeweiligen Teilsichtbereiche 18a-b ausgeleuchtet.

Die aufgenommenen Bilder können in der Auswertungseinheit 26 oder in einer nachgelagerten Bildverarbeitung mit an die Teilsichtbereiche 18a-b angepassten Parametern aufbereitet werden. Parameter des Bildsensors 24 oder der Beleuchtung werden abschnittsweise eingestellt beziehungsweise geregelt.

Dadurch werden beispielsweise Kontrast oder Helligkeit angepasst. Auch eine Strahlformung oder optische Filterung durch entsprechende Beschichtung durch die Umlenkelemente 30a-c ist vorgesehen.

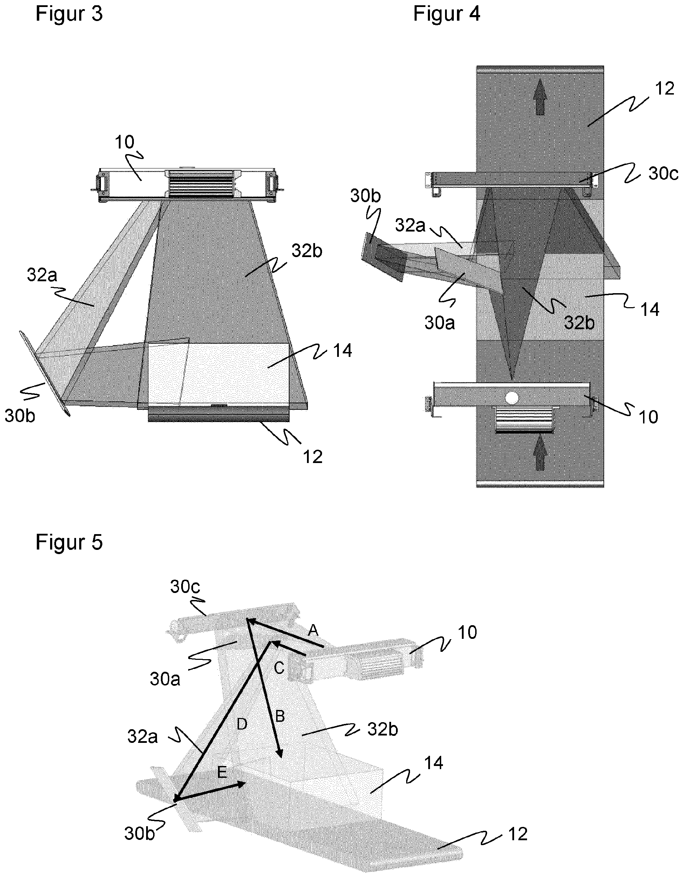

Figur 2 zeigt die Kameravorrichtung gemäß Figur 1 nochmals in einer dreidimensionalen Ansicht. Die Figuren 3 und 4 sind ergänzend eine zugehörige Frontalansicht in Förderrichtung und eine Draufsicht. Die Kamera 10 ist horizontal oder parallel zu dem Förderband und in dessen Förderrichtung 16, alternativ auch gegen die Förderrichtung 16 ausgerichtet. Ein seitlicher Empfangsstrahlengang 32a wird seitlich über ein oberes linksseitiges Umlenkelement 30a zunächst nach unten neben das Förderband 12 und dann über ein unteres linksseitiges Umlenkelement 30b möglichst senkrecht auf die Seitenfläche des Objekts 14 geführt oder gefaltet. Der seitliche Empfangsstrahlengang 32a entspricht dem in Figur 2 der Übersichtlichkeit halber nicht eigens bezeichneten Teilsichtbereich 18a. Entgegen der Erfindung könnte das obere linksseitige Umlenkelement 30a allein, also ohne unteres linksseitiges Umlenkelement, alternativ auf die Seitenfläche umlenken dann aber mit schrägem und nicht mehr senkrechtem Strahlengang. Ein zentraler Empfangsstrahlengang 32b wird an einem zentralen Umlenkelement 30c nach unten auf die Oberseite des Objekts 14 umgelenkt. Der zentrale Empfangsstrahlengang 32b entspricht dem hier nicht mehr eigens bezeichneten Teilsichtbereich 18b.

Dank der Umlenkelemente 30a-c und der entsprechend gefalteten Empfangsstrahlengänge 32a-b können mit der Kamera 10 aus zwei unterschiedlichen Perspektiven die Oberseite und die linke Seite des Objekts 14 gleichzeitig erfasst werden. Es versteht sich, dass dies alternativ ebenso auf die rechte Seite übertragbar wäre. Ohnehin ist die Erfassung von zwei Seiten für den Fall einer ersten Perspektive von der Seite und einer zweiten Perspektive von oben zwar besonders vorteilhaft, aber es wäre ebenso die Erfassung von zwei anderen Seiten oder Flächen des Objekts 14 beziehungsweise zwei andere Perspektiven als von oben und von der Seite vorstellbar.

Figur 5 zeigt nochmals die Darstellung der Figur 2 als Hintergrund und unterteilt darin die Empfangsstrahlengänge 32a-b in ihre geradlinigen Teilabschnitte A-E. Die Kamera 10 mit ihrer Empfangsoptik 22 hat nur einen begrenzten Tiefenschärfenbereich. Daher ist es besonders vorteilhaft, wenn die Lichtwege für die unterschiedlichen Perspektiven gleich lang sind. Dadurch werden von den simultan erfassten Seiten des Objekts 14 jeweils scharfe Bilder aufgenommen. Unterschiede in den Lichtweglängen, besonders wenn sie über die Toleranz hinausgehen, die ein endlicher Tiefenschärfenbereich zulässt, würden dagegen Unschärfen in der Aufnahme mindestens einer Seite oder Fläche ergeben. Durch geschickte Anordnung der Umlenkelemente 30a-c kann eine gleiche Länge der Empfangsstrahlengänge 32a-b gewährleistet, also konkret die Gleichung A+B=C+D+E erfüllt werden. Dazu ist das zentrale Umlenkelement 30c gegenüber dem oberen linksseitigen Umlenkelement 30a weiter von der Kamera 10 entfernt angeordnet, so dass sich A und B verlängern, und zwar gerade um so viel, wie es dem Umweg durch die doppelte Umlenkung auf die Seitenfläche mit den Abschnitten C, D, E entspricht. Es sei wiederholt, dass ungefähre Gleichheit im Rahmen der Ausdehnung des Tiefenschärfenbereichs genügt.

Die Kamera 10 kann statt eines Fixfokus einen verstellbaren Fokus oder Autofokus aufweisen. Das allein löst aber das Problem der Unschärfen aus unterschiedlichen Perspektiven nicht, da der Tiefenschärfenbereich so nur für eine Perspektive angepasst werden kann. Eine andere Möglichkeit, das Fokussierproblem zu lösen, ist eine Kombination mit der Lehre der einleitend genannten EP 2 937 810 A1. Dabei werden Umlenkelemente 30a-c geeignet durch gestaffelte Umlenkelemente in unterschiedlichem Abstand ersetzt. Die aufgenommenen Bildabschnitte vervielfachen sich entsprechend der Staffelung, und es wird jeweils ein Bildabschnitt ausgesucht und weiterverarbeitet, der bei passend langem Lichtweg im Tiefenschärfenbereich aufgenommen ist.

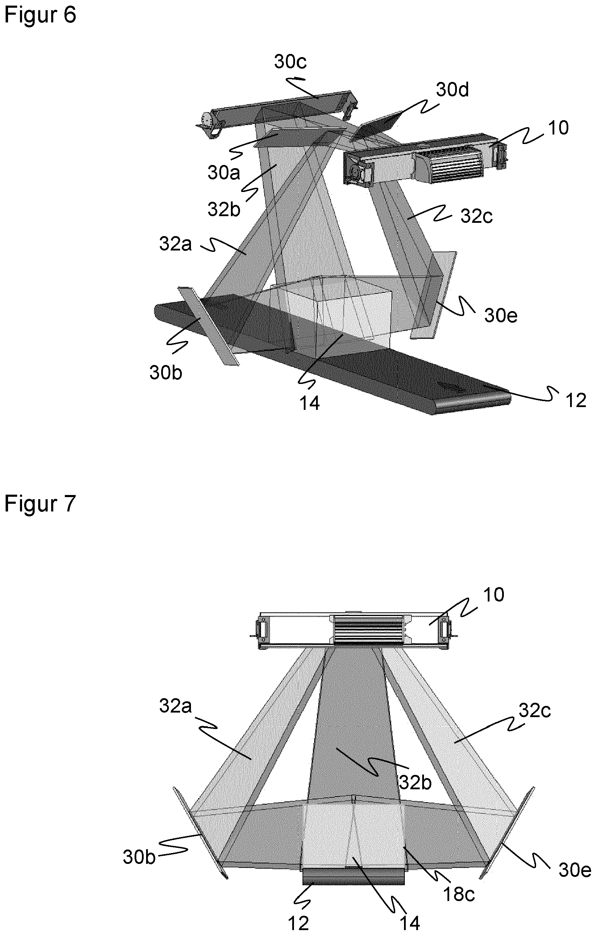

Figur 6 zeigt eine weitere Ausführungsform der Kameravorrichtung in einer dreidimensionalen Ansicht, mit den Figuren 7 und 8 als ergänzende zugehörige Frontalansicht in Förderrichtung beziehungsweise Draufsicht. Im Unterschied zu der Ausführungsform gemäß den Figuren 2 bis 5 wird nun auch die andere Seite des Objekts 14 aus einer zusätzlichen dritten Perspektive erfasst. Hinsichtlich der verschiedenen Ausgestaltungsmöglichkeiten und insbesondere der Auslegung der Lichtwege für eine jeweilige Aufnahme im Tiefenschärfenbereich gelten die obigen Ausführungen analog weiter. Das gilt auch insbesondere für eine Auslegung mit gleich langen Lichtwegen entsprechend der Figur 5, d.h. die Erfassung der anderen Seite des Objekts 14 sollte ebenfalls vorzugsweise mit einem gleich langen Lichtweg erfolgen.

Um eine dritte Perspektive zu schaffen und die zweite, hier in Förderrichtung 16 betrachtete rechte Seite des Objekts 14 auch noch zu erfassen, erfolgt eine zusätzliche Auskopplung eines weiteren seitlichen Empfangsstrahlengangs 32c seitlich über ein oberes rechtsseitiges Umlenkelement 30d zunächst nach unten neben das Förderband 12 und dann über ein unteres rechtsseitiges Umlenkelement 30e möglichst senkrecht auf die andere Seitenfläche des Objekts 14. Der weitere seitliche Empfangsstrahlengang 32c entspricht einem der Übersichtlichkeit halber nur in Figur 7 bezeichneten zusätzlichen Teilsichtbereich 18c. Es sind nun also zwei Teilsichtbereiche 18a, 18c beidseitig des zentralen Teilsichtbereichs 18b ausgekoppelt. Dank der Umlenkelemente 30a-e und der entsprechend gefalteten Empfangsstrahlengänge 32a-c können mit der Kamera 10 aus drei unterschiedlichen Perspektiven die Oberseite, die linke Seite und die rechte Seite des Objekts 14 gleichzeitig erfasst werden. Statt einer Erfassung von oben und von beiden Seiten wären drei andere Perspektiven auf eine andere Kombination von Seiten des Objekts 14 denkbar.

Wenn die Umlenkung nicht senkrecht auf die seitlichen Flächen erfolgt wie bisher beschrieben, sondern innerhalb der horizontalen Ebene mit einem 45°-Winkel, also quasi auf eine senkrechte Kante eines quaderförmig gedachten Objekts 14, lassen sich in einem nicht unter die Erfindung fallenden Beispiel nacheinander im Laufe der Förderbewegung mit der jeweiligen Seite auch die Vorder-oder Rückfläche erfassen. Bei der Ausführungsform gemäß den Figuren 2 bis 5 müsste man sich für Vorder- oder Rückfläche entscheiden oder die jeweils nicht erfasste Fläche über die Perspektive von oben durch entsprechendes Schrägstellen abdecken. In der Ausführungsform gemäß den Figuren 6 bis 8 kann die eine Seite mit der Vorderfläche und die andere Seite mit der Rückfläche erfasst werden. Allerdings muss dafür jeweils der Nachteil einer nicht mehr senkrechten Perspektive auf die jeweilige Objektfläche hingenommen werden.

## Patentansprüche

1. Kameravorrichtung (10, 30a-e) zur Erfassung eines Objekts (14) in einem Strom von relativ zu der Kameravorrichtung (10, 30a-e) in einer Längsrichtung (16) bewegten Objekten (14), wobei die Kameravorrichtung (10, 30a-e) eine Kamera (10) mit einem Bildsensor (24) zum Aufnehmen von Bildern der Objekte (14) und mindestens ein erstes Umlenkelement (30a) umfasst, wobei das Sichtfeld (18) der Kamera (10) mindestens einen ersten Teilsichtbereich (32a, 18a) mit Erfassung des ersten Umlenkelements (30a) und einen zweiten Teilsichtbereich (32b, 18b) ohne Erfassung des ersten Umlenkelements (30a) aufweist und wobei die Kamera (10) stationär an einer Fördereinrichtung (12) montiert ist, die den Strom der Objekte (14) in der Längsrichtung (16) fördert, wobei das erste Umlenkelement (30a) derart angeordnet ist, dass eine erste Perspektive des ersten Teilsichtbereichs (32a, 18a) eine andere ist als eine zweite Perspektive des zweiten Teilsichtbereichs (32b, 18b), der erste Teilsichtbereich (32a, 18a) somit eine andere Perspektive auf das Objekt (14) bietet als der zweite Teilsichtbereich (32b, 18b), so dass mit dem Bildsensor (24) gleichzeitig mindestens zwei Seiten des Objekts (14) aufgenommen werden, **dadurch gekennzeichnet,**
**dass** die erste Perspektive eine Seitensicht senkrecht zu der Längsrichtung (16) ist und dass das erste Umlenkelement (30a) einen seitlichen Empfangsstrahlengang (32a) entsprechend dem ersten Teilsichtbereich (32a,18a) zunächst nach unten neben die Fördereinrichtung (12) und dann über ein weiteres Umlenkelement (30b) auf eine Seitenfläche des Objekts (14) faltet, so dass die Umlenkung für die erste Perspektive zweistufig ist, dass weiterhin die Kameravorrichtung (10, 30a-e) eine Beleuchtungseinheit aufweist, um die Teilsichtbereiche (32a-c, 18a-c) über die jeweiligen Umlenkelemente (30a-e) zu beleuchten, dass Parameter des Bildsensors (24) oder der Beleuchtungseinheit abschnittsweise eingestellt oder geregelt werden und dass eine Strahlformung oder optische Filterung durch Beschichtung von Umlenkelementen (30a-b) vorgesehen ist.

2. Kameravorrichtung (10, 30a-e) nach Anspruch 1, wobei die zweite Perspektive eine Draufsicht ist.

3. Kameravorrichtung (10, 30a-e) nach einem der vorhergehenden Ansprüche, die ein zweites Umlenkelement (30d) umfasst, wobei das Sichtfeld der Kamera (10) einen dritten Teilsichtbereich (32c, 18c) mit Erfassung des zweiten Umlenkelements (30d) aufweist und das zweite Umlenkelement (30d) derart angeordnet ist, dass eine dritte Perspektive des dritten Teilsichtbereichs (32c, 18c) eine andere ist als die erste Perspektive und die zweite Perspektive, so dass mit dem Bildsensor (24) gleichzeitig drei Seiten des Objekts (14) aufgenommen werden, insbesondere die dritte Perspektive eine Seitensicht aus einer Gegenrichtung zu der ersten Perspektive ist.

4. Kameravorrichtung (10, 30a-e) nach einem der vorhergehenden Ansprüche, die ein drittes Umlenkelement (30c) aufweist, das derart angeordnet ist, dass es in dem zweiten Teilsichtbereich (32b, 18b) erfasst wird.

5. Kameravorrichtung (10, 30a-e) nach Anspruch 3,
die ein fünftes Umlenkelement (30e) aufweist, das den durch das zweite Umlenkelement (30d) gefalteten Empfangsstrahlengang (32c) der dritten Perspektive ein weiteres Mal faltet.

6. Kameravorrichtung (10, 30a-e) nach einem der vorhergehenden Ansprüche, wobei die Umlenkelemente (30a-e) derart angeordnet sind, dass die Lichtwege (32a-c) zwischen Kamera (10) und Objekt (14) für die verschiedenen Perspektiven mit einer einem Tiefenschärfenbereich der Kamera (10) entsprechenden Toleranz gleich lang sind.

7. Kameravorrichtung (10, 30a-e) nach einem der vorhergehenden Ansprüche, wobei die Umlenkelemente (30a-e) einen Spiegel und eine Halterung zur Montage in einer vorgegebenen Anordnung und Orientierung zu dem Strom der Objekte (14) aufweisen.

8. Kameravorrichtung (10, 30a-e) nach einem der vorhergehenden Ansprüche, wobei der Bildsensor (24) als Zeilensensor ausgebildet ist.

9. Kameravorrichtung (10, 30a-e) nach einem der vorhergehenden Ansprüche, wobei den Teilsichtbereichen (32a-c, 18a-c) nebeneinanderliegende Pixelbereiche des Bildsensors (24) entsprechen, insbesondere ein zentraler Pixelbereich dem zweiten Teilsichtbereich (32b, 18b) und ein seitlicher Pixelbereich weiteren Teilsichtbereichen (32a, 32c, 18a, 18c), oder wobei den Teilsichtbereichen (32a-c, 18a-c) übereinanderliegende Pixelbereiche des Bildsensors (24) entsprechen.

10. Kameravorrichtung (10, 30a-e) nach einem der vorhergehenden Ansprüche, die eine Steuer- und Auswertungseinheit (26) aufweist, die dafür ausgebildet ist, in den mit dem Bildsensor (24) erfassten Bilddaten Codebereiche (22) aufzufinden und deren Codeinhalt zu lesen.

11. Verfahren zur Erfassung eines Objekts (14) in einem Strom von durch eine Fördereinrichtung (12) in einer Längsrichtung (16) bewegten Objekten (14), wobei Bilder der Objekte (16) von einem Bildsensor (24) in einem Sichtfeld (18) aufgenommen werden und das Sichtfeld (18) einen ersten Teilsichtbereich (32a, 18a) mit Erfassung eines ersten Umlenkelements (30a) und einen zweiten Teilsichtbereich (32b, 18b) ohne Erfassung des ersten Umlenkelements (30a) aufweist, wobei das erste Umlenkelement (30a) derart angeordnet wird, dass eine erste Perspektive des ersten Teilsichtbereichs (32a, 18a) eine andere ist als eine zweite Perspektive des zweiten Teilsichtbereichs (32b, 18b), der erste Teilsichtbereich (32a, 18a) somit eine andere Perspektive auf das Objekt (14) bietet als der zweite Teilsichtbereich (32b, 18b), so dass mit dem Bildsensor (24) gleichzeitig mindestens zwei Seiten des Objekts (14) aufgenommen werden,
**dadurch gekennzeichnet,**
**dass** die erste Perspektive eine Seitensicht senkrecht zu der Längsrichtung (16) ist und dass das erste Umlenkelement (30a) einen seitlichen Empfangsstrahlengang (32a) entsprechend dem ersten Teilsichtbereich (32a,18a) zunächst nach unten neben die Fördereinrichtung (12) und dann über ein weiteres Umlenkelement (30b) auf eine Seitenfläche des Objekts (14) faltet, so dass die Umlenkung für die erste Perspektive zweistufig ist, dass weiterhin die Teilsichtbereiche (32a-c, 18a-c) über die jeweiligen Umlenkelemente (30a-e) beleuchtet werden, dass Parameter des Bildsensors (24) oder der Beleuchtungseinheit abschnittsweise eingestellt oder geregelt werden und dass eine Strahlformung oder optische Filterung durch Beschichtung von Umlenkelementen (30a-b) erfolgt.

## Claims

1. A camera device (10, 30a-e) for detecting an object (14) in a stream of objects (14) moving relative to the camera device (10, 30a-e) in a longitudinal direction (16), the camera device (10, 30a-e) comprising a camera (10) with an image sensor (24) for capturing images of the objects (14) and at least a first deflection element (30a), wherein the field of view (18) of the camera (10) comprises at least a first partial viewing area (32a, 18a) with detection of the first deflection element (30a) and a second partial viewing area (32b, 18b) without detection of the first deflecting element (30a), and wherein the camera (10) is stationarily mounted on a conveyor (12) conveying the stream of objects (14) in the longitudinal direction (16), wherein the first deflecting element (30a) is arranged in such a way that a first perspective of the first partial viewing area (32a, 18a) is different from a second perspective of the second partial viewing area (32b, 18b), the first partial viewing area (32a, 18a) thus offering a different perspective on the object (14) than the second partial view region (32b, 18b), so that at least two sides of the object (14) are simultaneously recorded with the image sensor (24),
**characterized in that** the first perspective is a side view perpendicular to the longitudinal direction (16) and **in that** the first deflection element (30a) folds a lateral receiving beam path (32a) corresponding to the first partial viewing area (32a,18a) first downwardly next to the conveying device (12) and then via a further deflection element (30b) onto a side surface of the object (14) so that the deflection for the first perspective is two-stage, **in that** furthermore the camera device (10, 30a-e) has an illumination unit for illuminating the partial view regions (32a-c, 18a-c) via the respective deflection elements (30a-e), **in that** parameters of the image sensor (24) or of the illumination unit are set or controlled section by section, and **in that** beam shaping or optical filtering is provided by coating deflection elements (30a-b).

2. The camera device (10, 30a-e) according to claim 1, wherein the second perspective is a top view.

3. The camera device (10, 30a-e) according to any of the preceding claims, comprising a second deflection element (30d), wherein the field of view of the camera (10) has a third partial viewing area (32c, 18c) with detection of the second deflection element (30d) and the second deflection element (30d) is arranged such that a third perspective of the third partial viewing area (32c, 18c) is different from the first perspective and the second perspective, so that three sides of the object (14) are simultaneously recorded with the image sensor (24), in particular the third perspective is a side view from an opposite direction to the first perspective.

4. The camera device (10, 30a-e) according to any of the preceding claims, comprising a third deflection element (30c) arranged to be detected in the second partial viewing area (32b, 18b).

5. The Camera device (10, 30a-e) according to claim 3,
comprising a fifth deflecting element (30e) which folds the receiving beam path (32c) of the third perspective folded by the second deflecting element (30d) a further time.

6. The camera device (10, 30a-e) according to any of the preceding claims, wherein the deflection elements (30a-e) are arranged such that the light paths (32a-c) between the camera (10) and the object (14) are of equal length for the different perspectives with a tolerance corresponding to a depth of field range of the camera (10).

7. The camera device (10, 30a-e) according to any of the preceding claims, wherein the deflecting elements (30a-e) comprise a mirror and a support for mounting in a predetermined arrangement and orientation with respect to the stream of objects (14).

8. The camera device (10, 30a-e) according to any of the preceding claims, wherein the image sensor (24) is formed as a line sensor.

9. The camera device (10, 30a-e) according to any of the preceding claims, wherein adjacent pixel areas of the image sensor (24) correspond to the partial viewing areas (32a-c, 18a-c), in particular a central pixel area corresponds to the second partial viewing area (32b, 18b) and a lateral pixel area corresponds to further partial viewing areas (32a, 32c, 18a, 18c), or wherein superimposed pixel areas of the image sensor (24) correspond to the partial viewing areas (32a-c, 18a-c).

10. The camera device (10, 30a-e) according to any of the preceding claims, comprising a control and evaluation unit (26) configured to find code regions (22) in the image data captured by the image sensor (24) and to read the code content thereof.

11. A method for detecting an object (14) in a stream of objects (14) moved by a conveyor (12) in a longitudinal direction (16), wherein images of the objects (14) are recorded by an image sensor (24) in a field of view (18) and the field of view (18) comprises a first partial viewing area (32a, 18a) with detection of a first deflection element (30a) and a second partial viewing area (32b, 18b) without detection of the first deflection element (30a), wherein the first deflection element (30a) is arranged in such a way that a first perspective of the first partial viewing area (32a, 18a) is different from a second perspective of the second partial viewing area (32b, 18b), the first partial viewing area (32a, 18a) thus providing a different perspective on the object (14) than the second partial viewing area (32b, 18b), so that at least two sides of the object (14) are simultaneously recorded with the image sensor (24),
**characterized in that** the first perspective is a side view perpendicular to the longitudinal direction (16), and **in that** the first deflection element (30a) folds a lateral receiving beam path (32a) corresponding to the first partial viewing area (32a, 18a) first downward next to the conveyor (12) and then via a further deflection element (30b) onto a side surface of the object (14), so that the deflection for the first perspective is two-stage, that furthermore the partial viewing areas (32a-c, 18a-c) are illuminated via the respective deflection elements (30ae), that parameters of the image sensor (24) or of the illumination unit are set or controlled section by section, and that beam shaping or optical filtering is provided by coating of deflection elements (30a-b).

## Revendications

1. Dispositif de caméra (10, 30a-e) pour la détection d'un objet (14) dans un flux d'objets (14) se déplaçant par rapport au dispositif de caméra (10, 30a-e) dans une direction longitudinale (16), le dispositif de caméra (10, 30a-e) comprenant une caméra (10) avec un capteur d'image (24) pour capturer des images des objets (14) et au moins un premier élément de déviation (30a), dans lequel le champ optique (18) de la caméra (10) comprend au moins une première zone de vision partielle (32a, 18a) avec détection du premier élément de déviation (30a) et une deuxième zone de vision partielle (32b, 18b) sans détection du premier élément de déviation (30a), et dans lequel la caméra (10) est montée de manière stationnaire sur un dispositif de transport (12) acheminant le flux d'objets (14) dans la direction longitudinale (16), dans lequel le premier élément de déviation (30a) est disposé de telle manière à ce qu'une première perspective de la première zone de vision partielle (32a, 18a) est différente d'une deuxième perspective de la deuxième zone de vision partielle (32b, 18b), la première zone de vision partielle (32a, 18a) offre ainsi une perspective différente sur l'objet (14) que la deuxième zone de vision partielle (32b, 18b), de sorte qu'au moins deux côtés de l'objet (14) sont enregistrés simultanément par le capteur d'images (24),
**caractérisé en ce que**
la première perspective est une vue latérale perpendiculaire à la direction longitudinale (16) et **en ce que** le premier élément de déviation (30a) replie un trajet de faisceau de réception latéral (32a) correspondant à la première zone de vision partielle (32a,18a) d'abord vers le bas à côté du dispositif de transport (12) et ensuite, via un autre élément de déviation (30b), sur une surface latérale de l'objet (14), de sorte que la déviation pour la première perspective est en deux étapes, **en ce qu'**en outre le dispositif de caméra (10, 30a-e) comprend une unité d'éclairage pour éclairer les zones de vision partielle (32a-c, 18a-c) par l'intermédiaire des éléments de déviation respectifs (30a-e), **en ce que** des paramètres du capteur d'image (24) ou de l'unité d'éclairage sont ajustés ou réglés par sections, et **en ce qu'**une formation du faisceau ou un filtrage optique est prévu par le revêtement d'éléments de déviation (30a-b).

2. Dispositif de caméra (10, 30a-e) selon la revendication 1, dans lequel la deuxième perspective est une vue de dessus.

3. Dispositif de caméra (10, 30a-e) selon l'une des revendications précédentes, comprenant un deuxième élément de déviation (30d), dans lequel le champ optique de la caméra (10) comprend une troisième zone de vision partielle (32c, 18c) avec détection du deuxième élément de déviation (30d) et le deuxième élément de déviation (30d) est disposé de telle manière qu'une troisième perspective de la troisième zone de vision partielle (32c, 18c) est différente de la première perspective et de la deuxième perspective, de sorte que trois côtés de l'objet (14) sont enregistrés simultanément par le capteur d'images (24), en particulier la troisième perspective est une vue latérale d'une direction opposée à la première perspective.

4. Dispositif de caméra (10, 30a-e) selon l'une des revendications précédentes, comprenant un troisième élément de déviation (30c) qui est disposé de telle manière à être détecté dans la deuxième zone de vision partielle (32b, 18b).

5. Dispositif de caméra (10, 30a-e) selon la revendication 3,
comprenant un cinquième élément de déviation (30e) qui replie une autre fois le trajet de faisceau de réception (32c) de la troisième perspective pliée par le deuxième élément de déviation (30d).

6. Dispositif de caméra (10, 30a-e) selon l'une des revendications précédentes, dans lequel les éléments de déviation (30a-e) sont disposés de telle manière à ce que les chemins lumineux (32a-c) entre la caméra (10) et l'objet (14) ont la même longueur pour les différentes perspectives avec une tolérance correspondant à une zone de profondeur de champ de la caméra (10).

7. Dispositif de caméra (10, 30a-e) selon l'une des revendications précédentes, dans lequel les éléments de déviation (30a-e) comprennent un miroir et un support pour le montage dans une disposition et une orientation prédéterminée par rapport au flux d'objets (14).

8. Dispositif de caméra (10, 30a-e) selon l'une des revendications précédentes, dans lequel le capteur d'image (24) est configuré comme un capteur linéaire.

9. Dispositif de caméra (10, 30a-e) selon l'une des revendications précédentes, dans lequel des zones de pixels adjacentes du capteur d'images (24) correspondent aux zones de vision partielle (32a-c, 18a-c), en particulier une zone de pixels centrale à la deuxième zone de vision partielle (32b, 18b) et une zone de pixels latérale à d'autres zones de vision partielle (32a, 32c, 18a, 18c), ou dans lequel des zones de pixels superposées du capteur d'images (24) correspondent aux zones de vision partielle (32a-c, 18a-c).

10. Dispositif de caméra (10, 30a-e) selon l'une des revendications précédentes, comprenant une unité de commande et d'évaluation (26) configurée pour trouver des zones de code (22) dans les données d'image capturées par le capteur d'image (24) et pour lire leur contenu de code.

11. Procédé de détection d'un objet (14) dans un flux d'objets (14) se déplaçant par un dispositif de transport (12) dans une direction longitudinale (16), dans lequel les images des objets (14) sont enregistrées par un capteur d'images (24) dans un champ optique (18) et le champ optique (18) comprend une première zone de vision partielle (32a, 18a) avec détection d'un premier élément de déviation (30a) et une deuxième zone de vision partielle (32b, 18b) sans détection du premier élément de déviation (30a), dans lequel le premier élément de déviation (30a) est disposé de telle manière à ce qu'une première perspective de la première zone de vision partielle (32a, 18a) est différente d'une deuxième perspective de la deuxième zone de vision partielle (32b, 18b), la première zone de vision partielle (32a, 18a) offre ainsi une perspective différente sur l'objet (14) que la deuxième zone de vision partielle (32b, 18b), de sorte qu'au moins deux côtés de l'objet (14) sont enregistrés simultanément par le capteur d'images (24),
**caractérisé en ce que**
la première perspective est une vue latérale perpendiculaire à la direction longitudinale (16) et **en ce que** le premier élément de déviation (30a) replie un trajet de faisceau de réception latéral (32a) correspondant à la première zone de vision partielle (32a,18a) d'abord vers le bas à côté du dispositif de transport (12) et ensuite, via un autre élément de déviation (30b), sur une surface latérale de l'objet (14), de sorte que la déviation pour la première perspective est en deux étapes, **en ce qu'**en outre les zones de vision partielle (32a-c, 18a-c) sont éclairées par l'intermédiaire des éléments de déviation respectifs (30a-e), **en ce que** des paramètres du capteur d'image (24) ou de l'unité d'éclairage sont ajustés ou réglés par sections, et **en ce qu'**une formation du faisceau ou un filtrage optique est prévu par le revêtement d'éléments de déviation (30a-b).
